(19) Europäisches Patentamt
European Patent Office
Office européen des brevets

(11) **EP 1 986 181 A2**

(12) **EUROPEAN PATENT APPLICATION**

(43) Date of publication:
**29.10.2008 Bulletin 2008/44**

(51) Int Cl.:
*G09G 3/36* (2006.01)

(21) Application number: **08013357.2**

(22) Date of filing: **05.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **08.02.2006 JP 2006031669**
**01.02.2007 JP 2007023004**

(62) Document number(s) of the earlier application(s) in accordance with Art. 76 EPC:
**07708016.6 / 1 983 504**

(71) Applicant: **Sharp Kabushiki Kaisha**
**Osaka-shi, Osaka 545-8522 (JP)**

(72) Inventors:
• **Kohashikawa, Seiji**
  **Suzuka-shi, Mie 513-0854 (JP)**
• **Sekiguchi, Yuhya**
  **Tsu-shi, Mie 514-0112 (JP)**
• **Yamaguchi, Yuhichiro**
  **Yaita-shi, Tochigi 329-2141 (JP)**

(74) Representative: **Müller - Hoffmann & Partner**
**Patentanwälte**
**Innere Wiener Strasse 17**
**81667 München (DE)**

Remarks:
This application was filed on 24-07-2008 as a divisional application to the application mentioned under INID code 62.

(54) **Liquid crystal display device**

(57)     It is possible to perform an optimal video expression in accordance with a change of a feature quantity of a video signal without lowering the display quality and reduce power consumption. A liquid crystal display device has a liquid crystal panel displaying a video, and a light source illuminating the liquid crystal panel, and when a feature quantity of an input video signal is larger than a predetermined value C3, emission brightness of the light source is variably controlled such that the emission brightness of the light source is reduced as the feature quantity becomes larger. In this case, the feature quantity of the input video signal is a ratio of an average brightness level of one frame to a maximal brightness level of an input video signal. For the predetermined value C3, the ratio of the average brightness level of one frame to the maximal brightness level of the input video signal is set to be within a range from 68.2% to 90.0%.

FIG. 4

**Description**

TECHNICAL FIELD

The present invention relates to a liquid crystal display device, and, more specifically, to a liquid crystal display device that is adapted to vary the emission brightness of its backlight light source according to an input video signal.

BACKGROUND OF THE INVENTION

For a liquid crystal display device including a liquid crystal panel that modulates the source light according to a video signal, and a backlight source to illuminate the liquid crystal panel, a technique has been known that improves the quality of a displayed video by controlling the emission brightness of the backlight light source of the device according to an input video signal.

Techniques are present that include: for example, one according to which the average brightness level of one frame (APL (Average Picture Level)) is calculated as a feature quantity of an input video signal and the emission brightness of a backlight light source is adjusted according to the APL; another one according to which the emission brightness of a backlight light source is adjusted based on the maximal brightness level and the minimal brightness level of the brightness levels of a pixel in one frame of an input video signal; and yet another one according to which the emission brightness of a backlight light source is adjusted based on the result of analyzing a histogram, etc., of the brightness level of an input video signal.

For example, Patent Document 1 discloses a liquid crystal display device to avoid black floating impediments, to improve the visual impression for the contrast, to reproduce a high quality video with glossiness, and to provide the video with the screen brightness optimal for viewers. The liquid crystal display device of Patent Document 1 detects the APL of the input video signal and adjusts the brightness of the backlight light source according to the detected APL. The device further detects the peak value of the input video signal and corrects the control property of the emission brightness of the backlight light source according to the peak value. Patent Document 1: Japanese Laid-Open Patent Publication No. 2004-258669

DISCLOSURE OF THE INVENTION

PROBLEMS TO BE SOLVED BY THE INVENTION

For liquid crystal display devices in recent years, improvement of the display quality and reduction of the power consumption of the backlight have become significant tasks with the shift to larger sizes of the devices. For example, when a video with a very low APL that is a feature quantity of a video signal or a video with a very high APL is displayed, the emission brightness of the backlight light source can be lowered without degrading the display quality.

Therefore, when a video with a very low APL that is a feature quantity of a video signal or a video with a very high APL is displayed as above, the power consumption can be reduced by properly lowering the emission brightness of the backlight light source.

However, in the device described in the above Patent Document 1, no device or no technical idea is implemented of reducing the power consumption while maintaining the quality of the displayed video noting the feature quantity of a video signal and a problem has risen concerning the device that the power consumption can not be reduced without degrading the display quality.

The present invention was conceived in view of the above circumstances and the object thereof is to provide a liquid crystal display device that is adapted to be able to realize reduction of the power consumption without degrading the display quality when the emission brightness of the backlight light source is controlled according to a feature quantity of a video signal.

MEANS FOR SOLVING THE PROBLEMS

In order to solve the above problems, a first technical means is a liquid crystal display device that has a liquid crystal panel displaying a video, and a light source illuminating the liquid crystal panel, and that, when a feature quantity of an input video signal is larger than a predetermined value, variably controls emission brightness of the light source such that the emission brightness of the light source is reduced as the feature quantity becomes larger, wherein the feature quantity of the input video signal is a ratio of an average brightness level of one frame to a maximal brightness level of an input video signal, and wherein for the predetermined value, the ratio of the average brightness level of one frame to the maximal brightness level of the input video signal is set to be within a range from 68.2% to 90.0%.

EFFECT OF THE INVENTION

According to the present invention, further reduction of the power consumption can be realized without degrading the display quality when the emission brightness of the backlight light source is controlled according to a feature quantity of a video signal.

BRIEF DESCRIPTION OF THE DRAWINGS

[Fig. 1] Fig. 1 is a block diagram for explaining the configuration of an embodiment of a liquid crystal display device according to the present invention.
[Fig. 2] Fig. 2 is a diagram of an exemplary configuration of a backlight unit that can be applied to the liquid crystal display device of the present invention.
[Fig. 3] Fig. 3 is a diagram of another exemplary configuration of the backlight unit that can be applied to the liquid crystal display device of the present invention.
[Fig. 4] Fig. 4 is a chart of an example of a brightness control property of a backlight light source using a brightness control table.
[Fig. 5] Fig. 5 is a histogram of an exemplary distribution of the APL extracted from a broadcasted program.
[Fig. 6] Fig. 6 is a histogram of an exemplary distribution of the APL extracted from a broadcasted program in the movie genre.
[Fig. 7] Fig. 7 is another chart of an example of the brightness control property of a backlight light source using the brightness control table.
[Fig. 8] Fig. 8 is a chart for explaining an exemplary setting of the brightness control property used according to a light control mode or the ambient brightness of the liquid crystal display device.
[Fig. 9] Fig. 9 is a flowchart of an exemplary operation of preventing the rapid variation of the brightness of the backlight light source by preparing a plurality of brightness control tables and changing the table No.
[Fig. 10] Fig. 10 is a flowchart of an exemplary operation of gradual transition to a brightness control table after a change by computing executed when the brightness control table No. has been changed.
[Fig. 11] Fig. 11 is a flowchart of an operation of gradual transition to a brightness control property of the table after the change by changing the brightness for a certain predetermined number of times executed when the table No. has been changed.
[Fig. 12] Fig. 12 is a graph for explaining the relation between the emission brightness of the backlight light source and the display quality of a video.
[Fig. 13] Fig. 13 is a graph for explaining the relation between the brightness control property of the backlight light source and a reduced amount of the power consumption.
[Fig. 14] Fig. 14 is a graph for explaining the relation between the display quality of a video and the reduced amount of the power consumption.

EXPLANATIONS OF REFERENCE NUMERALS

1...liquid crystal display device; 10...APL; 11...antenna; 12...tuner; 13...decoder; 14...APL measuring portion; 15...filter; 16...backlight control portion; 17...backlight unit; 18...video processing portion; 19...LCD controller; 20...liquid crystal panel; 21...micro computer; 22...table storing memory; 23...brightness control table; 24...brightness sensor; 25...remote control light-receiving portion; 26...multiplier; 27...remote control device; 30...housing; 31...fluorescent lamp; 32...diffusing plate; 41...red light source; 42...green light source; and 43...blue light source.

PREFERRED EMBODIMENTS OF THE INVENTION

According to an embodiment of a liquid crystal display device of the present invention, an average picture level (APL) of one frame of a video signal is used as a feature quantity of an input video signal. A brightness control table to be used to control the emission brightness of a backlight light source according to the APL is also retained. In a liquid crystal display device, the APL of a video signal to be displayed is detected and, using a brightness control property of a brightness control table, the backlight is controlled such that the emission brightness corresponds to the detected APL. In this case, when a video signal with a very low APL or a video signal with a very high APL is input, the power consumption of the backlight is reduced while maintaining the display quality (such as the brightness, the contrast, and the sharpness) of the displayed video, by properly controlling the emission brightness of the backlight light source.
After this, the control property of the emission brightness of the backlight light source for the APL is varied according to a light control mode of the liquid crystal display device or corresponding to the ambient brightness of the liquid crystal display device and, thereby, the power consumption of the backlight is reduced while maintaining the display quality (such as the brightness, the contrast, and the sharpness) of the displayed video.

Referring to the accompanying drawings, description will be given below in more detail for an embodiment of the present invention.

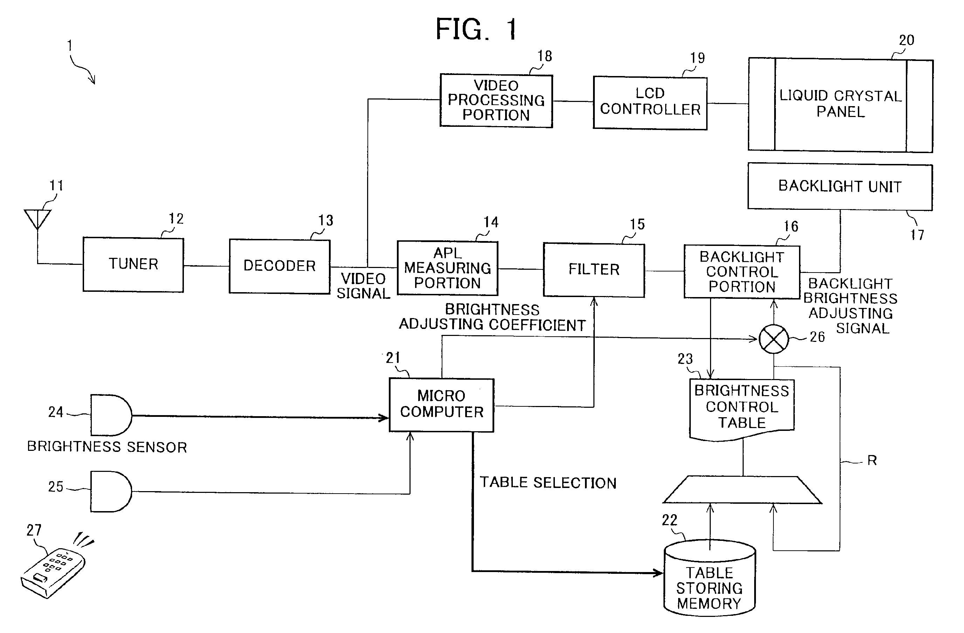

Fig. 1 is a block diagram for explaining the configuration of the embodiment of a liquid crystal display device according to the present invention. A tuner 12 of the liquid crystal display device 1 tunes a broadcasted signal received by an antenna 11. A decoder 13 processes by decoding the broadcasted signal tuned by the tuner 12, thereby, de-multiplexes the signal, and outputs the video signal that is to drive a liquid crystal panel 20.

After undergoing various video processes in a video processing portion 18, the video signal de-multiplexed by the decoder 13 is input into an LCD controller 19 that drives and controls the liquid crystal panel 20. The LCD controller 19 outputs a liquid crystal driving signal to a gate driver and a source driver, both not shown, of the liquid crystal panel 20 based on the input video signal and, thereby, a video according to the video signal is displayed on the liquid crystal panel 20.

The above video signal de-multiplexed by the decoder 13 is also output to an APL measuring portion 14. The APL measuring portion 14 measures the APL for each one frame of the video signal output from the decoder 13. The measured APL is sent to a filter 15. The APL corresponds to one of the feature quantities of a video signal of the present invention and, hereinafter, will be represented by a percentage (%) to the maximal brightness level. In the embodiment, the emission brightness control of the backlight unit 17 corresponding to the APL is executed based on the brightness control property of a brightness control table 23.

Although, in the example shown in Fig. 1, the APL is measured from the video signal that the decoder 13 has processed by decoding, the APL may be measured after the video processing by the video processing portion 18. However, the video processing portion 18 may execute, for example, a process of executing OSD (On-Screen Display) display, a scaling process, or a letter box display (restriction on the screen area by a black mask, etc.) process. In this case, by measuring the APL from the video signal output from the decoder 13 (that is, the video signal not undergone any video processes by the video processing portion 18), the control of the backlight brightness corresponding to the input video signal can be executed without receiving any influence of the video processes by the video processing portion 18. Therefore, measuring the APL from the video signal before undergoing any video processes as in Fig. 1 is more preferable.

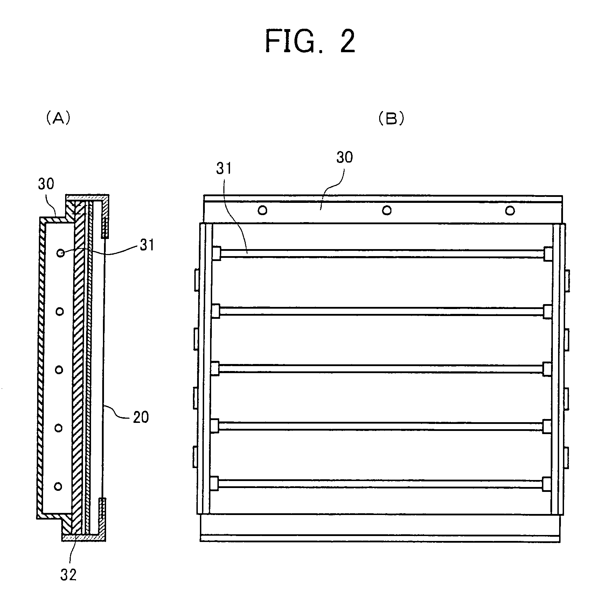

The backlight unit 17 is configured, for example, as shown in Fig. 2, by arranging a plurality of thin-tube-shaped fluorescent lamps 31 being regularly spaced between each other in a housing 30 fitted to the back face of the liquid crystal panel 20. The illuminating light emitted from the fluorescent lamps 31 is diffused evenly by a diffusing plate 32.

In this case, the backlight unit 17 includes, for example: a light control circuit that outputs as a light attenuating signal a pulse width modulating output of which the signal duration ratio (duty) of a high voltage level and a low voltage level of a rectangular pulse varies according to a backlight brightness adjusting signal input from the backlight control portion 16; and an inverter that receives a light attenuating signal from the light control circuit, generates an AC voltage of the cycle and the voltage corresponding to the light attenuating signal, and turns on and drives the fluorescent lamps 31 by applying the generated AC voltage to the fluorescent lamps 31, both not shown. The inverter operates when the output of the above light control circuit is at the high voltage level, and stops the operation thereof when the output is at the low voltage level and, thereby, the brightness of the light source is adjusted by executing the intermittent operation thereof according to the output duty of the light control circuit.

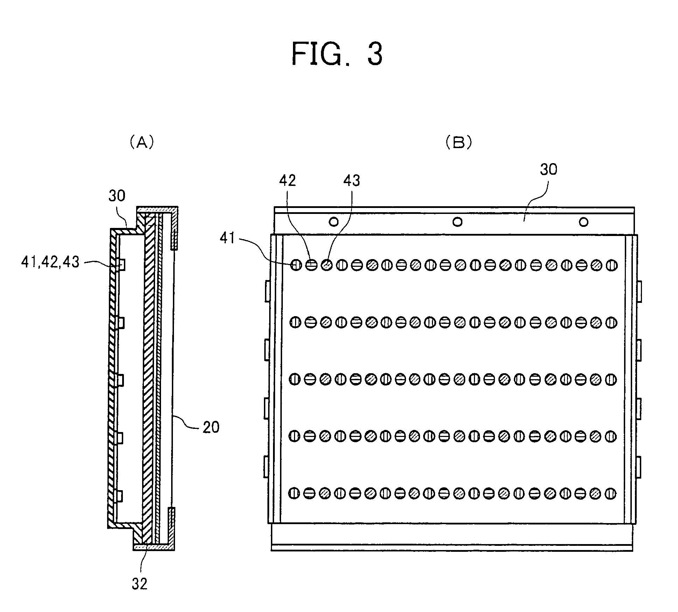

As shown in Fig. 3, the backlight unit 17 may be configured by arranging a plurality of colors including the three primary colors of red, green, and blue of LED light sources, that is, red light sources 41, green light sources 42, and blue light sources 43 in the housing 30 fitted to the back face of the liquid crystal panel 20. The emission brightness of each of the LED light sources can be controlled by a LED current for each LED light source. Though not shown, a unit of a scheme employing both of the above fluorescent lamps and the LEDs can be applied as the backlight unit 17. Furthermore, the liquid crystal panel 20 may be illuminated by a unit employing the configuration, so-called "side-edge type", of making the light from the light sources such as the fluorescent lamps, the LEDs, etc., uniform over a plane using a light guiding panel.

The brightness control table 23 defines the relation of the emission brightness of the backlight light sources corresponding to a feature quantity (in this case, the APL) of the video signal for one frame of an input video signal. A table storing memory 22 such as a ROM is caused in advance to store the brightness control table 23 and the emission brightness of the backlight unit 17 is controlled by using the brightness control table 23 according to the APL detected from the input video signal to be displayed.

The filter 15 defines the tracking of the emission brightness of the backlight light sources on the APL variation between frames when the backlight brightness is controlled according to the measured value of the APL, and the filter 15 is configured by, for example, a multi-stage digital filter.

The filter 15 inputs the APL of each frame measured by the APL measuring portion 14, and calculates an output APL by performing weighted Average operation using the input APL and the APLs of one or more previous frame in which weight is given to each APL. In this case, the number of the previous frame stages to be reflected on the frame can be variably set and weighting is set for each of the current frame and the previous frames (for the number of stages being set). The APL of the current frame and the APLs of the delayed frames for the number of used stages are weighted-averaged according to the weights respectively thereof and the result is output. Thereby, the tracking of the output APL that follows the actual APL variation can be properly set.

The APL output from the filter 15 is input into the backlight control portion 16. Based on the brightness control table 23 used, the backlight control portion 16 outputs a backlight brightness adjusting signal to adjust the backlight brightness corresponding to the input APL and, thereby, controls the light source emission brightness of the backlight unit 17.

The liquid crystal display device 1 includes a remote control light-receiving portion 25 to receive a remote control signal transmitted from a remote control device 27. The remote control light-receiving portion 25 is configured by, for example, a light-receiving LED to receive an infrared remote control operating signal. The remote control operating signal received by the remote control light-receiving portion 25 is input into a micro computer 21 and the micro computer 21 executes predetermined control according to the input remote control operating signal.

The liquid crystal display device 1 has a light control mode function that adjusts the brightness of the display screen of the liquid crystal panel 20 in response to a user operation provided to a predetermined operating means such as the above remote control device 27. The light control mode function adjusts the brightness of the display screen of the liquid crystal panel 20 by varying the light source emission brightness of the backlight unit 17 in response to the user operations.

More specifically, the micro computer 21 outputs a brightness adjusting coefficient in response to a user operation for a predetermined operation. The brightness adjusting coefficient is used to set the brightness of the entire area of the screen in response to the user operation. For example, in a menu screen, etc., retained by the liquid crystal display device 1, an item for adjusting the brightness of the screen is set. A user can set an arbitrary screen brightness level by operating the item for setting. The micro computer 21 recognizes the brightness setting and outputs to a multiplier 26 a brightness adjusting coefficient according to the brightness being set. The multiplier 26 turns on the backlight unit 17 at a brightness level according to the brightness being set by multiplying a brightness control value by the brightness control table 23 currently used, by the brightness adjusting coefficient.

Otherwise, a plurality of brightness control tables 23 respectively corresponding to brightness settings of the light control mode may be prepared in the table storing memory 22, and the micro computer 21 may recognize the brightness setting by the light control mode, and select a brightness control table to be used for controlling the backlight unit 17. When the brightness control table is changed, a plurality of brightness control tables may be obtained between the current table and the brightness control table after the change, by computing, etc., and, thereby, the table may be gradually changed.

The liquid crystal display device 1 includes a brightness sensor 24 as a brightness detecting means to detect the brightness around (the ambient brightness of) the liquid crystal display device 1. A photodiode, for example, can be applied as the brightness sensor 24. The brightness sensor 24 generates a DC voltage signal corresponding to the detected ambient light and outputs the signal to the micro computer 21. The micro computer 21 outputs a brightness adjusting coefficient to the multiplier 26. The multiplier 26 turns on the backlight unit 17 at a brightness according to the brightness around the device by multiplying a brightness control value by the brightness control table 23 currently used, by the brightness adjusting coefficient.

Otherwise, a plurality of brightness control tables 23 respectively corresponding to brightness levels around the device may be prepared in the table storing memory 22, and the micro computer 21 may recognize the brightness around the liquid crystal display device, and select a brightness control table to be used for controlling the backlight unit 17. When the brightness control table is changed, a plurality of brightness control tables may be obtained between the current table and the brightness control table after the change, by computing, etc., and, thereby, the table may be gradually changed.

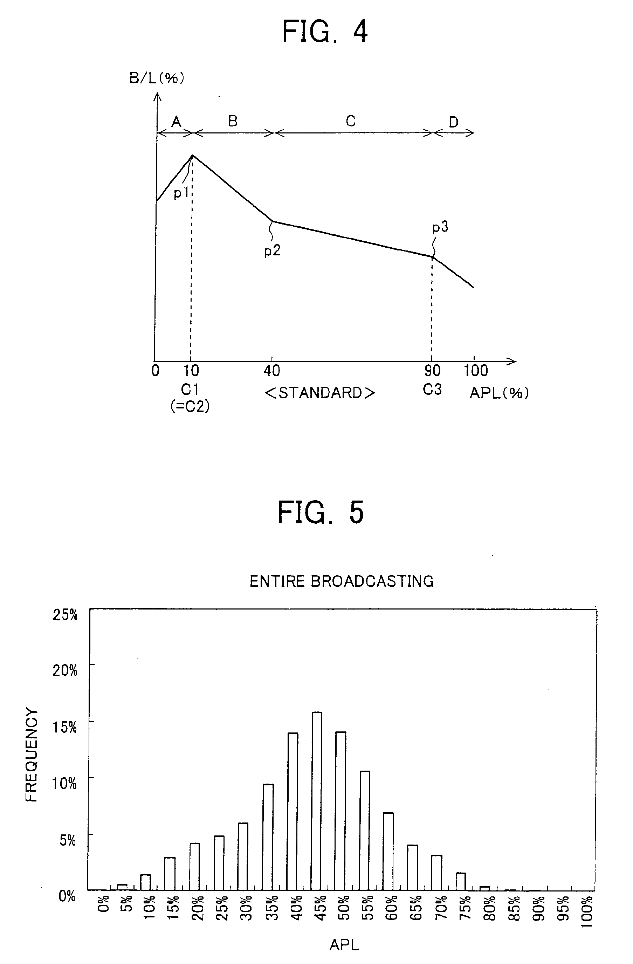

Fig. 4 shows an example of a brightness control property of a backlight light source using a brightness control table. In Fig. 4, the axis of abscissa represents the APL in percentage and the APL becomes 0% when the displayed video is black on the entire screen and the APL becomes 100% when the displayed video is white on the entire screen. The axis of ordinate represents the emission brightness ratio of the backlight light source and the ratio becomes 100% when the emission brightness of the backlight light source is made most bright and the ratio becomes 0% when the backlight light source is turned off.

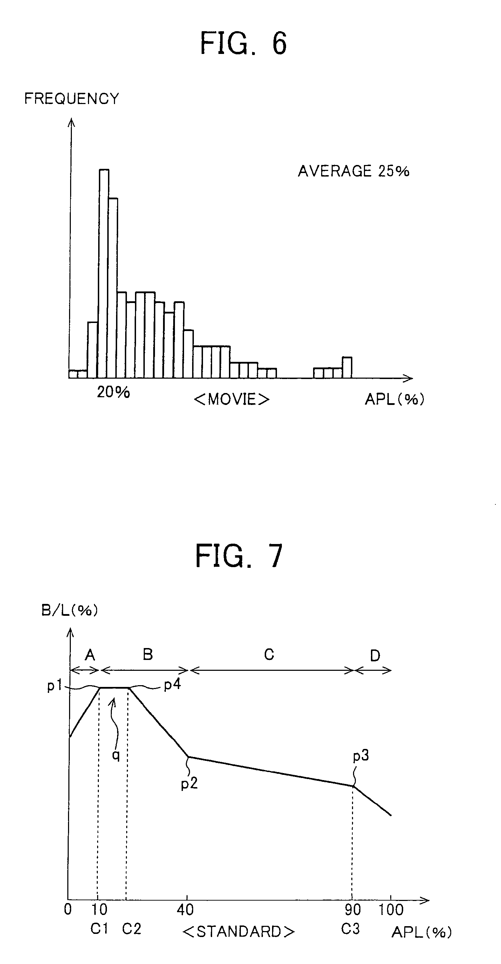

The brightness control property shown in Fig. 4 shows that the brightness control property of the backlight light source against the APL is varied corresponding to a signal region denoted by "A" for which the APL is low, signal regions respectively denoted by "B" and "C" for which the APL is at an intermediate level, and a signal region denoted by "D" for which the APL is high. In this case, each point at which the slope of the brightness control property of the backlight light source against a feature quantity of a video signal (in the example, the APL) varies, is defined as a property varying point. In Fig. 4, the intersections p1, p2, p3 formed by the straight lines spanning respectively over the four regions of A to D are the property varying points. The APL value of p1 is a first predetermined value C1 and a second predetermined value C2, and the APL value of p3 is the third predetermined value C3. Here, the predetermined value of the present invention corresponds to the third predetermined value C3. In Fig. 4, one point that has the APL value (=C1) for which the property varying point p1 is set, represents the brightness control property that includes the maximal emission brightness of the backlight light source. However, for example, when an APL region (C1 to C2) for which the emission brightness of the backlight light source is maximal and constant is present as the brightness control property shown in Fig. 7, an APL value of the lowest APL value in the APL region is a first predetermined value C1 and an APL value of the highest APL value in the APL region is a second predetermined value C2. That is, for the brightness control property of Fig. 4, the APL for which the emission brightness of the backlight light source shows the maximum thereof is only one point and, therefore, it becomes C1 = C2.

In a region (the region A) for which the feature quantity of the video signal is very small, many video are present that can maintain the display quality of the video even when the brightness of the backlight light source is lowered, as described later. This is because many of the video have low contrast impression for the entire screen and are not susceptible to the influence of the backlight brightness. Such video tend to increase as the feature quantity of the video signals becomes smaller. Therefore, the brightness of the backlight light source can be more lowered as the feature quantity of the video signals becomes smaller. In the region A, the emission brightness is reduced as the APL become smaller from the property varying point p1 for which the brightness of the backlight light source is the maximum.

In a region (the region D) for which the feature quantity of the video signal is very large, many video are present that can maintain the display quality of the video even when the brightness of the backlight light source is lowered, as described later. The video tend to increase as the feature quantity of such video signals become larger. This is because the brightness of the entire video increases as the feature quantity of the video signal increases and, therefore, a satisfactory display quality of the video can be maintained even when the brightness of the backlight light source is lowered. Therefore, the brightness of the backlight light source can be more lowered as the APL become larger. In the region D, the emission brightness is reduced as the APL become lager from the property varying point p3 of the brightness of the backlight light source.

In the regions B, D, similarly to the above conventional technique: the emission brightness of the backlight light source is increased around the property varying point p1 and, thereby, the contrast impression is improved; and the emission brightness of the backlight light source is reduced around the property varying point p3 and, thereby, unnecessary glare can be decreased. Between the property varying points p1, p3, the brightness characteristic of the backlight light source is properly determined based on the contrast impression, etc.

For determining the property varying points p1 and p3, a subjective experiment for the relation between the emission brightness of the backlight light source and the display quality of a video was executed and the relation between the brightness control property of the backlight light source and the power consumption was discussed. In the subjective experiment, the relation between: the APL value of an input video signal; and influence of the emission brightness of a backlight light source caused when the input video signal is output by displaying was quantified.

More specifically: a plurality of video respectively of different APL values were arbitrarily prepared; while each video was being displayed, the video display quality obtained when the emission brightness of the backlight light source was switched between a high brightness and a low brightness thereof was observed; and whether the emission brightness of the backlight light source needed to be switched to the high brightness was judged by five-step evaluation. The criteria for the five-step evaluation are as follows and the experiment was executed with five subjects and the average of the results thereof was taken.

5 The high brightness is obviously necessary.
4 The high brightness is necessary to an extent.
3 It is not clear whether the high brightness is necessary.
2 The high brightness is not necessary so much.
1 The high brightness is obviously unnecessary.

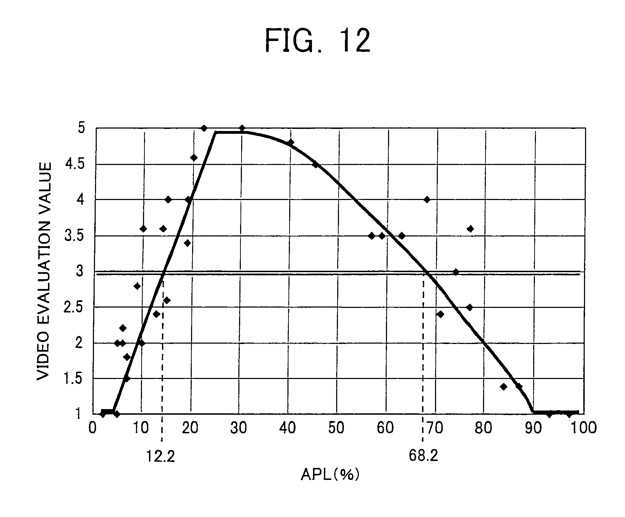

The result of the above experiment is shown in Fig. 12. The X-axis represents the APL value and the Y-axis represents the video evaluation value that is the average value of the subjective evaluation values concerning the video display quality. It is shown that the emission brightness of the backlight light source needs to be at a higher brightness to maintain the display quality of the video as the value on the Y-axis becomes higher.

In regions respectively with the APL of 2% or lower and 90% or higher, the video evaluation value was one and, from the evaluation, this region was judged as "the high brightness is obviously unnecessary". That is, the high brightness was not necessary for all of the video that belong to this region. It is considered that this was because it was judged that the necessity for the high brightness was not considered because the video in the region with the APL of 2% or lower were not recognized as video and the video in the region with the APL of 90% or higher were white on almost all the screens.

In a region with the APL of 2% to 25%, the necessity for the high brightness increases almost linearly with the increase of the APL value and, around a position with the APL of 12%, the video that need the high brightness become about half of all the video. It is considered that this is because a few video need the high brightness in a region with the APL of about 12% or lower and, many video need the high brightness in a region with the APL of about 12% or higher.

In a region with the APL of about 25%, almost all the video need the high brightness. It is considered that this is because almost all the video need the high brightness because those video need the contrast thereof even for the details thereof as video.

In a region with the APL of 30% to 90%, the necessity for the high brightness gradually decreases. Similarly to the video in a region with the APL of about 25%, most of the video in a region with the APL of about 30% need the high brightness. However, the video for which the glare thereof was remarkable increased when the APL was varied from 30% to 90%. About half of the video do not need the high brightness in a region with the APL of about 68%. Most of the video do not need the high brightness at a position with the APL of 90% and it is considered that necessity for low brightness was enhanced in terms of the glare in contrast. It is also considered that the judgment of whether a video needs the high brightness is changed depending on whether the APL is about 68% or higher.

The evaluation result concerning the video display quality in the low APL region and the high APL region was approximated by a straight line or a quadric curve. The following is obtained by approximating the result for the region with the APL of 25% or lower.

$$y=0.20x+0.61$$

The APL value for the video evaluation value of 3 is 12.2%. That is, it can be said that the least video display quality can be maintained when the first predetermined value C1 is set to be 12.2% or lower.

The following is obtained by approximating the region with the APL of 30% to 90% by a quadric curve.

$$y=-0.0008x^2+0.030x+4.71$$

The APL value for the video evaluation value of 3 is 68.2%. That is, it can be said that the least video display quality can be maintained when the third predetermined value C3 is set to be 68.2% or higher.

Description will be given for the relation between the brightness control property of the backlight light source and the power consumption. Based on the APL distribution extracted from arbitrary video, reduced power consumption is calculated for the case where the value of the property varying point p1 in the brightness control property of the backlight light source is varied from zero to 25. Reduced brightness value of the backlight light source in the region with the APL lower than that of the property varying point p1 (the region A) was set to be 15% per variation of the APL by 10%. This is because the brightness variation becomes rapid when the brightness variation of the backlight light source per variation of the APL value by 10% exceeds 15% and, therefore, the viewers might feel difference. The video to be measured is a movie. This is because a movie is a video content for which the viewers care the video quality most, and the frequency thereof at which low APLs appear is higher than any other contents.

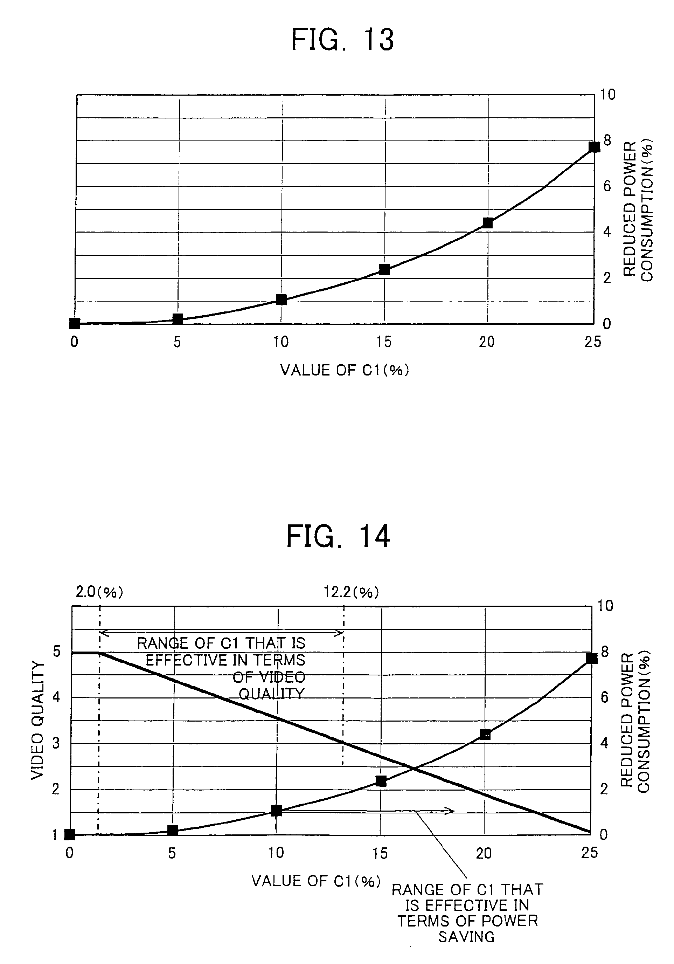

The result of the above measurement is shown in Fig. 13. The X-axis represents the value of C1 that is the APL value of the property varying point p1. The Y-axis represents the reduced power consumption relative to the case where the value of C1 is zero. From Fig. 13, it can be seen that: when C1=0, the reduced amount is zero; the reduced power consumption increases as C1 becomes larger; when the value of C1 is 10%, the reduced power consumption is about 1%; the reduced power consumption increases non-linearly by shifting the value of C1 to a value with a higher APL; and when the value of C1 is 25%, the reduced power consumption is about 7.7%.

A discussion will be given on the results of the above experiment and the power consumption calculation. For a product of this kind, reduction of the power consumption thereof and improvement of the display quality of video are both important tasks. To facilitate the reduction of the power consumption without degrading the display quality of video, the emission brightness of the backlight light source must not be lowered for the regions each with the video evaluation value of 3 or higher, that are regions that each include many video for which the emission brightness of the backlight light source should not be lowered to maintain the display quality of the video, and the emission brightness of the backlight light source may be lowered for the regions each with the video evaluation value of 3 or lower, that are regions for which no problem is arisen in terms of the display quality of the video even when the emission brightness of the backlight light source is lowered.

More specifically, for video each with the APL of 12.2% or lower or 68.2% or higher, the power consumption can be reduced while maintaining the display quality of the video by lowering more the emission brightness of the backlight light source.

Priority of the display quality of video and that of the reduced power consumption varies depending on the circumstances. The top priority may be put on the display quality of video or on the reduced power consumption. Therefore, how much the values respectively of C1 and C3 can be varied will be discussed.

As above, the optimal value of C1 with which the reduced power consumption can be maximized while maintaining the least video display quality is 12.2%. On the other hand, video of which the display quality is degraded when the emission brightness of the backlight light source is lowered are present in the regions with the video evaluation value of 3 or lower, though the number thereof is small. Therefore, the display quality of more video can be maintained by reducing the value of C1. More specifically, the number of video that can maintain the display quality thereof is increased by reducing the value of C1 from 12.2% and, when the value of C1 is set to be 2%, the display quality can be maintained for all the video. Therefore, it is preferable to set the value of C1 to be within a range from 2% to 12.2%.

As above, the value of C1 can take a value within the range from 2% to 12.2%, and the display quality of the entire video becomes better as the value becomes smaller. Whereas, the reduced power consumption is increased as the value of C1 is increased. That is, the display quality of video and the reduced power consumption are in the relation of trading-off. Therefore, for an actual product, whether the display quality of the video is emphasized or power-saving is emphasized needs to be determined and the value of C1 needs to be designed accordingly.

Today, power-saving of electronic devices is an essential item and, when the effect of power-saving is asserted as a product, the effect of at least 1% or more is considered to be necessary. Therefore, in the present embodiment, the reduced power consumption is set to be 1% or more. For example, the reason why the target of annual efficiency improvement in factories under the Energy Conservation Act is set to be 1% is because 1% is also considered to be the border. When the reduced power consumption is set to be 1% or more, the value of C1 is 10%. Therefore, description will be given below assuming that the value of C1 is set to be 10 in the present embodiment.

To clarify the above, a graph formed by superimposing the values of the video display quality on Fig. 13 is shown in Fig. 14. The video display quality is a value obtained by inverting the video evaluation value, and "5" refers to being able to maintain the display quality of all video and "1" refers to that the fewest video can maintain the display quality thereof. Therefore, when the value of C1 is set to be 25%, the display quality of all video can not be maintained. It is shown that: the video that can maintain the display quality thereof is gradually increased by lowering the value of C1 from 25%; and, when the value of C1 is set to be 2%, the display quality of all video can be maintained. Especially, it is shown that: when the video evaluation value is 3 or higher is the time when the value of C1 is set to be within a range from 2% to 12.2%; on the other hand, the value of C1 needs to be set to be 10% or higher to make the reduced power consumption be 1% or more.

Discussion on C3 will also be given similarly to C1. The optimal value for C3 is 68.2. Video of which the display quality is degraded when the emission brightness of the backlight light source is lowered are present also in the regions with the video evaluation value of 3 or lower, though the number thereof is small. Therefore, the display quality of more video can be maintained by increasing the value of C3.

More specifically, the number of video that can maintain the display quality thereof is increased by increasing the value of C3 from 68.2% and, when the value of C3 is set to be 90%, the display quality can be maintained for all the video. Therefore, it is preferable that the value of C3 is set to be within a range from 68.2% to 90%.

As above, the optimal value of C3 with which the reduced power consumption can be maximized while maintaining the least video display quality is 68.2%. However, the display quality of video is maintained as high as possible in the present embodiment because of the reasons including that the effect of power consumption reduction is weak on the high-APL side compared to the low-APL side. Therefore, description will be given below assuming that the value of C3 is set to be 90%.

As above, in the example of the present embodiment, the property varying point p1 that is present on the lowest-APL side in the brightness control property is set at the position for which the APL is 10% and, the property varying point p3 that is present on the highest-APL side in the brightness control property is set at the position for which the APL is 90%. Similarly to the above conventional technique, to increase the light source emission brightness with a possible lower APL value and, thereby, improve the contrast impression, and to reduce the light source emission brightness with a possible higher APL value and, thereby, reduce the unnecessary glare impression, a property varying point p2 is set at a position for which the APL is 40% and the property varying point p1 for which the APL is 10% is defined as a property varying point for which the emission brightness of the backlight light source becomes maximal.

As above, the present embodiment is characterized in that the emission brightness of the backlight light source for either or both of the video for which the feature quantity of the video signal is very small and those for which the feature quantity of the video signal is very large is suppressed to be low as above and, thereby, the power consumption is reduced while maintaining the image quality.

When such a characteristic is satisfied, the brightness control property is not limited to the above example. For example, as shown in Fig. 7, a signal region q for which the emission brightness value of the backlight light source is constant may be present in a signal region for which the APL is larger than that of the property varying point p1 on the lowest-APL side. Widening the signal region q corresponds to increasing the regions for which the emission brightness of the backlight light source is higher, and also corresponds to increasing the regions with which video with higher contrast impression can be obtained. Therefore, the display quality of the video can be improved. In the brightness control property of Fig. 7: the value of the APL (10%) for which the property varying point p1 is set corresponds to the first predetermined value C1 of the present invention; the value of the APL (20%)for which a property varying point p4 is set corresponds to the second predetermined value C2 of the present invention; and the value of the APL (90%) for which a property varying point p3 is set corresponds to the third predetermined value C3 of the present invention.

The brightness control property may not only be the above linear characteristic but also may be a non-linear characteristic. When the brightness control property is non-linear, the non-linear brightness control property is approximated to the linear brightness control property and property varying points in the approximated linear brightness control property are assumed and, thereby, the brightness control of the backlight light source can be defined similarly to the case of the above linear brightness control property.

The light source emission brightness may be controlled using the brightness control property according to which the emission brightness of the backlight light source is reduced as the APL becomes lower, and the amplitude of the video signal may be increased, as the brightness control property between the first predetermined value C1 and the third predetermined value C3. Thereby, the contrast may be improved suppressing the black floating.

Description will be given for the light control mode of the liquid crystal display device and an exemplary control to change the emission brightness characteristic of the backlight light source corresponding to the brightness around the liquid crystal display device.

As above, the liquid crystal display device 1 includes the light control mode of adjusting the brightness of the display screen displayed on the liquid crystal panel 20 in response to the user operations to the predetermined operating means such as the remote control device 27, and a function of detecting the brightness around (the ambient brightness of) the liquid crystal display device 1.

In this case, the brightness control property to control the emission brightness of the backlight light source associated with the setting of the above light control mode or associated with the variation of the ambient brightness is changed. Thereby, displaying video with a proper image quality and at a low power consumption is enabled coping with the variation of these conditions. Such a change of the brightness control property may be executed in response only to the above light control mode or may be executed coping only with the variation of the ambient brightness. Such a change may also be executed depending on the both of the conditions of the light control mode and the ambient brightness of the device. In addition, in each of the conditions of the light control mode and the ambient brightness of the device, a different brightness control property may be employed.

As above, the change of the brightness control property in this case may be configured to correct a brightness control value based on the brightness control table using a brightness adjusting coefficient, or may be executed by preparing a plurality of brightness control tables 23 and selecting a brightness control table to be used according to a condition. In addition, when the brightness control table is changed, a plurality of brightness control tables may be obtained between the current table and the brightness control table after the change, by computing, etc., and, thereby, the table may be gradually changed.

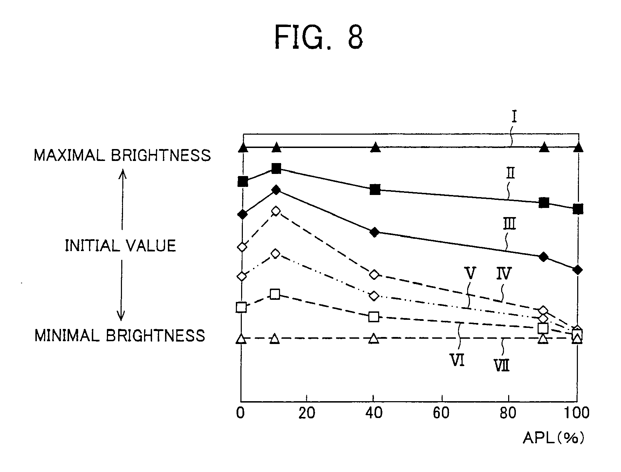

Fig. 8 is a chart for explaining an exemplary setting of the brightness control property used according to the light control mode or the ambient brightness.

The brightness control property of the above plurality of brightness control tables is set as in Fig. 8. In the example of Fig. 8, seven kinds of brightness control properties (I) to (VII) are set.

In this case, the emission brightness of the backlight light source is basically reduced in a setting to darken the screen brightness in conjunction with the setting operation for the light control mode by the user. Otherwise, the emission brightness of the backlight light source is reduced as the brightness of the ambient brightness of the liquid crystal display device darkens. Thereby, the glare on the screen and the stimulation to the eyes can be reduced, the video can be displayed at a proper brightness level, and the power consumption can be reduced.

In Fig. 8, the brightness control property (IV) shows the standard setting value (the initial value). This brightness control property (IV) uses the brightness control property shown in the above Fig. 4. Therefore, the idea of this standard brightness control property is as above and is a control property that realizes a reduced power consumption maintaining the image quality.

The case where no emission brightness control of the backlight light source corresponding to the APL is executed is first considered. Without emission brightness control corresponding to the APL, generally, the emission brightness of the backlight light source is simply increased or reduced to certain emission brightness levels under the control by the light control mode or under the control corresponding to the brightness around the device. The emission brightness value (the light control level) is denoted by $d_2$. In those controls, the initial value (the standard value) is denoted by do, the possible maximal emission brightness of the backlight light source is denoted by $d_{max}$, and the possible minimal emission brightness thereof is denoted by $d_{min}$.

It is also assumed that the emission brightness control corresponding to the APL is added to the above specification. An emission brightness value obtained from a curve of the brightness control property is denoted by $d_1$. In this case, control based on the light control mode/the brightness around the device is applied by the following equation and, thereby, the final emission brightness D of the backlight light source is obtained.

When the light control level $d_2$ is larger than the initial value do, the following is obtained.

$$D=d_1+(d_2-d_0)\{(d_{max}-d_1)/(d_{max}-d_0)\} \quad ... \quad (1)$$

When the light control level $d_2$ is smaller than the initial value do, the following is obtained.

$$D=d_1-(d_0-d_2)\{(d_1-d_{min})/(d_0-d_{min})\} \quad ... \quad (2)$$

According to the above Equations (1), (2), brightness control properties as in Fig. 8 are obtained by representing the APL on the axis of abscissa and the emission brightness of the backlight light source on the axis of ordinate.

That is, a brightness control property (I) is set at the possible maximal emission brightness of the backlight light source. In this case, the brightness control property (I) is constant without depending on the APL that is a feature quantity of a video signal. A brightness control property (VII) is set at the possible minimal emission brightness of the backlight light source. In this case, the brightness control property (VII) is also constant without depending on the APL that is a feature quantity of a video signal.

The distance between each property varying point of the brightness control property (IV) that is the standard and the brightness control property (I) is trisected and, thereby, property varying points respectively of brightness control properties (II), (III) are determined. Similarly, the distance between each property varying point of the brightness control property (IV) that is the standard and the brightness control property (VII) is trisected and, thereby, property varying points respectively of brightness control properties (V), (VI) are determined.

From these brightness control properties (I) to (VII) , a brightness control property to be used for the emission brightness control of the backlight light source is selected (or calculated by computing) according to the setting of the light control mode or corresponding to the ambient brightness.

By setting the brightness control property, a slope is always formed between property varying points in one brightness control property except the brightness control properties (I), (VII) that are set for the possible maximal/minimal emission brightness and, thereby, the user can perceive variation of the screen brightness associated with the APL variation. For example, in the case where the standard brightness control property (IV) is parallel-shifted along the emission brightness direction, when the property (IV) gets close to the possible maximal emission brightness or the possible minimal emission brightness, the protruded portion of the brightness control property impinges the possible maximal emission brightness or the possible minimal emission brightness and a flat portion is generated.

In this case, the emission brightness of the backlight light source is not varied even when the APL is varied. In this case, a portion that includes overlapped emission brightness levels is generated in a plurality of brightness control properties. In such a case, especially when the brightness control property is interlocked with the light control mode, this interlocking is not preferable because the case occurs where the emission brightness of the backlight light source does not vary even when light control is executed.

When a user adjusts the light control level or adjusts the screen brightness according to the brightness around the device, the user can adjust perceiving the brightness variation watching any video by varying the emission brightness at a plurality of regularly-spaced stages between the initial value and the possible maximal emission brightness of the backlight light source and between the initial value and the possible minimal emission brightness of the backlight light source as above.

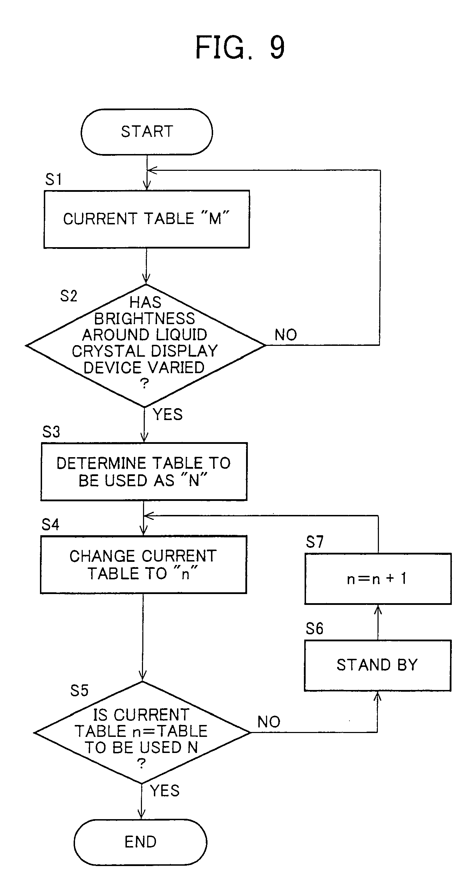

Fig. 9 is a flowchart of an exemplary operation of preventing the rapid variation of the brightness of the backlight light source by preparing a plurality of brightness control tables and changing the table No. Description will be given for an exemplary changing process for the brightness control table corresponding to the brightness around the liquid crystal display device.

In the case where the No. of the brightness control table currently referred to is "M" (S1), when the brightness around the liquid crystal display device varies according to the brightness sensor (S2), the No. of the table to be used of the brightness control tables is determined as "N" based on the brightness (S3).

Between the brightness control table N determined at the above S3 and the brightness control table M currently used, a brightness control table n having the brightness control property that is closest to that of the brightness control table M currently used of the plurality of brightness control tables each having a different intermediate brightness control property, is selected and the table is updated as the brightness control table n to be currently used (S4).

Whether the brightness control table n to be currently used is the same table as the target brightness control table N is judged (S5). When the table n is not the same table, after standing by for a specific time period (for example, five frames) (S6), a brightness control table "n+1" having the brightness control property that is closest to that of the brightness control table N next to the brightness control table n is selected (S7). The selected brightness control table n+1 is updated as the table n to be currently used (a table obtained by updating the table n+1) (S4).

Using the above process, a stepwise change of the brightness control property is repeated until the brightness control table currently used becomes the target brightness control table N. When the current brightness control table has become the table N, a switching and selecting process of the brightness control tables corresponding to the variation of the ambient brightness ends.

In the above example, description has been given for an exemplary switching and selecting process of the brightness control tables corresponding to the variation of the brightness around the liquid crystal display device. However, when the brightness control table is switched in response to a user operation during the light control mode, it is judged whether change of the screen brightness has been executed according to the light control mode at the above S2, and the No. of the brightness control table to be used is determined based on these conditions for the change at the above step S3. Thereby, the brightness control property can be switched stepwise until the target brightness control table to be used is reached.

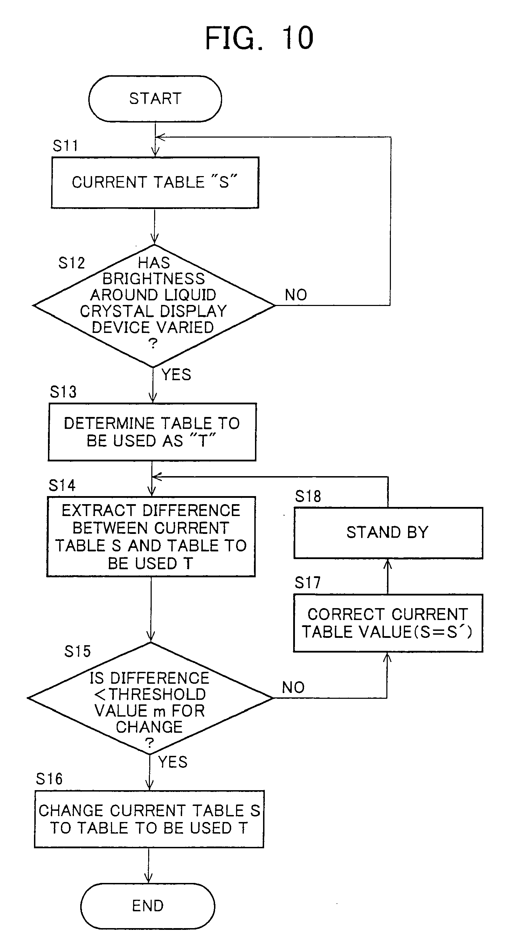

Fig. 10 is a flowchart of an exemplary operation of gradual transition to the brightness control table after the change by computing executed when the brightness control table No. has been changed. In this case, a loop R of the selection portion of the brightness control table shown in Fig. 1 is used.

In the case where the brightness control table No. currently referred to is "S" (S11), when the brightness around the liquid crystal display device varies according to the brightness sensor (S12), the No. of the table to be used of the brightness control tables is determined based on the brightness (S13) (In this case, it is assumed that the No. of the table to be used is determined as "T").

A difference is extracted in the brightness (a control value to control the emission brightness of the backlight light source) against a feature quantity (in this case, the APL) of a video signal of an input video signal between the brightness control table S current used and the determined brightness control table T, and whether the extracted difference is smaller than a predetermined threshold value "m" is judged (S15). In this case, between the brightness control tables S and T, all of the control values to control the emission brightness of the backlight light source are compared and a difference is taken for each comparison result.

When it is judged that the above difference is equal to or larger than the threshold value m, the emission brightness property of the brightness control table S currently used is corrected such that the property gets closer by a predetermined value to the emission brightness property of the target brightness control table T, and "S" is re-denoted by "S'" (S17). After standing by for a specific time period (for example, five frames) (S18), the operation returns to S14 again and the difference between the table S currently used (S after being updated to S') after the correction and the target brightness control table T is extracted and the extracted difference is compared to the threshold value m.

As above, the stepwise change of the brightness control property is repeated and, when the difference between the brightness control table S currently used and the target brightness control table becomes smaller than the threshold value m, the brightness control table S currently used is changed to the brightness control table T (S16) and the switching and selecting process of the brightness control table corresponding to the ambient brightness ends.

In the above example, when the brightness control table is switched according to the light control mode, whether variation of the screen brightness according to the light control mode is present at the above S12 is also judged. At step S13, the No. of the brightness control table to be used is determined based on these conditions for the change. Thereby, the brightness control property can be switched stepwise until the target brightness control table to be used is reached.

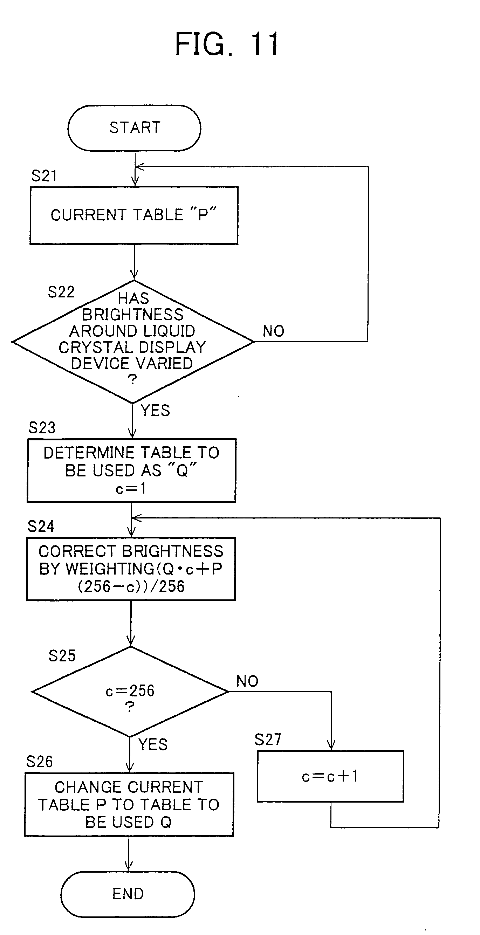

Fig. 11 is a flowchart of an operation of gradual transition to a brightness control property of the table after the change by changing the brightness for a certain predetermined number of times executed when the table No. has been changed. Referring to Fig. 11, description will be given for the operation of changing the brightness control property using 256 frames.

In the case where the table No. currently referred to is "P" (S21), when the brightness sensor detects that the brightness around the liquid crystal display device has varied (S22), the No. of the table to be used corresponding to a genre code after the change is determined accordingly (in this case, it is assumed that the No. of the table is determined as "Q"). The number of times of the change "c" is simultaneously set to 1 (S23). According to the following Equation (3), the varied brightness obtained by weighting the table P currently used and the determined table Q to be used is calculated and the brightness is corrected (S24).

```
Corrected Brightness P'=(Q•c+P(256-c))/256 ... (3)
```

Whether c=256 (whether the brightness is corrected for 256 times that is the number of times being set) is checked (S25). When the set number of times is not reached, a count value "c" is updated once (S27) and the current brightness is corrected to P' using again the above Equation 1. The operation of S24 to S25 to S27 is repeated for a predetermined number of times. When corrections have been executed for 256 times that is the number of time being set, the table P currently used is finally changed to the table Q to be used. Though the example of gradually correcting the brightness table taking 256 frames has been shown in the above example, the degree of the mildness of the variation (transition time period) can be adjusted by setting a predetermined number of times not limiting to 256 frames. In this manner, when the brightness around the liquid crystal display device varies, rapid switching of the emission brightness of the light source can be prevented.

Similarly, in the above example, when the brightness control table is switched according to the light control mode, whether any variation of the screen brightness according to the light control mode is present is judged at the above S22 and the No. of the brightness control table to be used is determined based on these conditions for the change at the above step S23. Thereby, the brightness control property can be mildly switched until the target brightness control table to be used is reached.

When the emission brightness of the backlight light source is suppressed based on the APL, the average value of the brightness levels of all the video signals in one frame does not need to be obtained to obtain the APL. For example, the average value of the brightness levels of the video signals for central portions respectively of the displayed video excluding the end portions thereof may be obtained and this average value may be used as the feature quantity of the video signals. For example, based on the genre information de-multiplexed and obtained from a received signal of the broadcast, the received signal may be gate-controlled such that a screen area set in advance (that is highly possibly superimposed with characters, symbols, etc.) is excluded and, thereby, a feature quantity of the video signal only including the predetermined partial portion may be measured.

The examples have been shown concerning the present invention referring to the drawings as above and, in each of the above examples, the APL is used as the feature quantity of the input video signal and the emission brightness of the backlight is controlled corresponding to the APL. However, the feature quantity of the above video signal is not limited to the APL and, for example, the state of the peak brightness levels (present or absent, or many or few) of one frame of an input video signal may be used.

Similarly, the maximal brightness level or the minimal brightness level in a predetermined portion (duration) in one frame, or the brightness distribution state (histogram) may be used as a feature quantity of an input video signal or, based on a feature quantity of the video signal obtained by combining these items, the emission brightness of the backlight may be variably controlled.

The above brightness control can be applied not only to the liquid crystal display device of a direct-viewing type that includes the backlight unit 17 shown in Fig. 2 or Fig. 3 but also to a projection-type display device such as a liquid crystal projector. In this case, the video display is executed by applying the source light to the back face of the liquid crystal panel and the emission brightness of the source light may be controlled according to the above brightness control property.

**Claims**

1. A liquid crystal display device that has a liquid crystal panel displaying a video, and a light source illuminating the liquid crystal panel, and that, when a feature quantity of an input video signal is larger than a predetermined value, variably controls emission brightness of the light source such that the emission brightness of the light source is reduced as the feature quantity becomes larger, wherein

   the feature quantity of the input video signal is a ratio of an average brightness level of one frame to a maximal brightness level of an input video signal, and wherein

   for the predetermined value, the ratio of the average brightness level of one frame to the maximal brightness level of the input video signal is set to be within a range from 68.2% to 90.0%.

FIG. 1

# FIG. 2

(A)

(B)

# FIG. 3

(A)

30

41,42,43

20

32

(B)

42  43        30

41

# FIG. 4

# FIG. 5

ENTIRE BROADCASTING

# FIG. 6

FREQUENCY

AVERAGE 25%

20%

<MOVIE>

APL(%)

# FIG. 7

B/L(%)

A    B        C        D

p1              p4

q

p2

p3

0   10      40              90  100
    C1  C2   <STANDARD>      C3   APL(%)

# FIG. 8

# FIG. 9

```
                    ┌──────────────┐
                    │    START     │
                    └──────┬───────┘
                           │
    S1                     ▼
    ┌───────────────────────────────┐
    │      CURRENT TABLE "M"         │
    └───────────────┬───────────────┘
                    │
    S2              ▼
              ╱─────────────╲
             ╱      HAS       ╲
            ╱   BRIGHTNESS     ╲        NO
           ╱  AROUND LIQUID     ╲──────────────┐
           ╲  CRYSTAL DISPLAY   ╱              │
            ╲  DEVICE VARIED   ╱               │
             ╲       ?        ╱                │
              ╲─────────────╱                  │
                    │ YES                      │
    S3              ▼                          │
    ┌───────────────────────────────┐         │
    │   DETERMINE TABLE TO           │         │
    │   BE USED AS "N"               │         │
    └───────────────┬───────────────┘         │
                    │                          │
    S4              ▼              S7          │
    ┌───────────────────────────┐  ┌──────────────────┐
    │   CHANGE CURRENT          │  │    n = n + 1      │
    │   TABLE TO "n"            │  └─────────▲────────┘
    └───────────┬───────────────┘           │
                │              S6            │
                │              ┌──────────────────┐
                │              │    STAND BY       │
                │              └─────────▲────────┘
    S5          ▼                        │
          ╱─────────────╲                │
         ╱ IS CURRENT    ╲      NO        │
        ╱  TABLE n=TABLE  ╲───────────────┘
        ╲  TO BE USED N   ╱
         ╲       ?       ╱
          ╲─────────────╱
                │ YES
                ▼
         ┌──────────────┐
         │     END      │
         └──────────────┘
```

# FIG. 10

START

S11

CURRENT TABLE "S"

S12 HAS BRIGHTNESS AROUND LIQUID CRYSTAL DISPLAY DEVICE VARIED ? —— NO

YES

S13

DETERMINE TABLE TO BE USED AS "T"

S14

EXTRACT DIFFERENCE BETWEEN CURRENT TABLE S AND TABLE TO BE USED T

S18

STAND BY

S17

CORRECT CURRENT TABLE VALUE(S=S´)

S15 IS DIFFERENCE <THRESHOLD VALUE m FOR CHANGE ? —— NO

YES

S16

CHANGE CURRENT TABLE S TO TABLE TO BE USED T

END

# FIG. 11

START

S21

CURRENT TABLE "P"

S22

HAS BRIGHTNESS AROUND LIQUID CRYSTAL DISPLAY DEVICE VARIED ?

NO

YES

S23

DETERMINE TABLE TO BE USED AS "Q"
$c=1$

S24

CORRECT BRIGHTNESS BY WEIGHTING $(Q \cdot c + P(256-c))/256$

S25

$c=256$ ?

NO

YES

S27

$c = c + 1$

S26

CHANGE CURRENT TABLE P TO TABLE TO BE USED Q

END

# FIG. 12

# FIG. 13

VALUE OF C1(%)

REDUCED POWER CONSUMPTION(%)

# FIG. 14

2.0(%)    12.2(%)

RANGE OF C1 THAT IS
EFFECTIVE IN TERMS
OF VIDEO
QUALITY

VIDEO QUALITY

VALUE OF C1(%)

REDUCED POWER CONSUMPTION(%)

RANGE OF C1 THAT
IS EFFECTIVE IN
TERMS OF POWER
SAVING

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2004258669 A